# EUROPÄISCHE PATENTSCHRIFT

(11) **EP 1 154 147 B1**
(45) Veröffentlichungstag und Bekanntmachung des Hinweises auf die Patenterteilung: **14.06.2006**
(21) Anmeldenummer: 01108663.4
(22) Anmeldetag: 06.04.2001
(51) Int. Cl.: F02M 31/125

(54) **Kraftstoff-Förderanlage für eine Diesel-Brennkraftmachine**
Fuel supply device for a diesel engine
Dispositif d'alimentation en carburant pour moteur diesel

(30) Priorität: 11.05.2000 DE 10023123
(43) Veröffentlichungstag der Anmeldung: 14.11.2001
(73) Patentinhaber: Bayerische Motoren Werke Aktiengesellschaft, 80809 München (DE)
(72) Erfinder: Mayr, Karl, 4441 Behamberg (AT); Eibenberger, Franz, 4453 Trattenbach (AT); Preisach, Robert, 4493 Wolfern (AT); Rechberger, Erwin, 4020 Linz (AT)

(56) Entgegenhaltungen:
- EP-A- 0 130 406
- EP-A- 0 304 742
- DE-A- 3 120 960
- DE-A- 4 005 572
- DE-C- 3 717 342
- DE-C- 3 923 369
- US-A- 4 397 287

## Beschreibung

Die Erfindung betrifft eine Kraftstoff-Förderanlage für eine Diesel-Brennkraftmaschine mit den Merkmalen aus dem Oberbegriff des Patentanspruchs 1.

Sie geht von der deutschen Offenlegungsschrift DE 40 05 572 A1 aus. In dieser ist ein Niederdruckkraftstoffkreislauf mit Kraftstoffvorwärmung für eine luftverdichtende Einspritz-Brennkraftmaschine, insbesondere für Nutzfahrzeuge beschrieben. Dieser Niederdruck-Kraftstoffkreislauf weist folgende Merkmale auf: Der Kreislauf umfasst einen Kraftstoffbehälter, eine Kraftstoffpumpe, zumindest einen Kraftstofffilter sowie eine Heizeinrichtung für einen einer Einspritzanlage der Brennkraftmaschine zugeführten Kraftstoff, dessen Überschuss und/oder Leckagemenge über eine Rücklaufleitung dem Kraftstoffbehälter zugeführt ist, wobei der Kraftstoff einer Pumpe der Einspritzanlage über eine Filteranordnung zugeführt ist, die mit einer druckabhängig gesteuerten Heizeinrichtung ausgerüstet ist und dass ferner in den Kraftstoffbehälter über die Rücklaufleitung rückgeführter Kraftstoff der Pumpe ansaugseitig zurückgeführt ist.

Nachteilig bei der beschriebenen Ausgestaltung ist, dass beim Kaltstart der Brennkraftmaschine bei tiefen Temperaturen Paraffinflocken aus dem Kraftstoff ausflocken können, die die Kraftstoffförderanlage verstopfen können.

Aufgabe der vorliegenden Erfindung ist es, eine Maßnahme aufzuzeigen, wie bei tiefen Temperaturen bei einem Kaltstart der Brennkraftmaschine das Ausflocken aus dem Kraftstoff verhindert werden kann.

Diese Aufgabe ist durch die Merkmale im kennzeichnenden Teil des Patentanspruchs 1 dadurch gelöst, dass im Kraftstoffbehälter eine steuer-oder regelbare elektrische Kraftstoffpumpe angeordnet ist und dass die Filteranordnung mit der lntankpumpe über eine einzige Förderleitung mittels eines Stromteilers verbundene, parallel angeordneter Kraftstofffilter umfasst, von denen einer förderdruckabhängig gesteuert vom Kraftstoff durchströmt und mittels eines stromab des Stromteilers angeordneten Druckbegrenzungsventils zu- und abschaltbar ist, wobei das Druckbegrenzungsventil ferner einen elektrischen Schalter für die Heizeinrichtung betätigt.

Als eine wärmeabgebende Einrichtung dient erfindungsgemäß die Intankpumpe von hoher Förderleistung mit der Möglichkeit, eine gegenüber den Anforderungen der Einspritzanlage der Brennkraftmaschine wesentlich höhere Kraftstoffmenge in einem Kurzschlussbetrieb umzuwälzen und dabei den umgewälzten, temperierten Kraftstoff möglichst nahe der Ansaugseite der Intankpumpe austreten zu lassen. Diese Maßnahme kann weiter durch eine die Ansaugseite der Intankpumpe umgebenden Schwalltopf vorteilhaft unterstützt sein.

Ein weiterer Gesichtspunkt der Erfindung ist, den in den Kraftstoffbehälter rückgeführten Kraftstoff aufgrund seiner aufgenommenen Wärme der Intankpumpe ansaugseitig zuzuführen.

In einer ersten Ausgestaltung der Erfindung wird vorgeschlagen, dass die Filteranordnung mit der Intankpumpe über eine einzige Förderleitung mittels eines Stromteilers verbundene, parallel angeordnete Kraftstofffilter umfasst, von denen einer förderdruckabhängig gesteuert vom Kraftstoff durchströmt und mittels eines stromab des Stromteilers angeordneten Druckbegrenzungsventils zu- und abschaltbar ist, wobei das Druckbegrenzungsventil ferner einen elektrischen Schalter für die Heizeinrichtung betätigt.

Mit dieser Anordnung wird die Heizeinrichtung bedarfsgerecht zugeschaltet und bei sinkendem Steuerdruck aufgrund der Durchgängigkeit des ersten Filters bedarfsgerecht abgeschaltet und somit das Bordnetz wesentlich geschont. So ist beispielsweise dem durch eine Paraffinausscheidung verstopften ersten Kraftstofffilter ein demgegenüber förderdruckabhängig gesteuert zuschaltbarer Kraftstofffilter zugeordnet, der mit einer druckabhängig gesteuerten Heizeinrichtung ausgerüstet ist.

In weiterer Ausgestaltung der Erfindung ist vorgesehen, dass die Heizeinrichtung des einen Kraftstofffilters druck- und temperaturabhängig mittels Sensoren über eine Motorsteuereinheit und/oder über mit der Klemme 15 eines Zündschlosses verbundene Schalter ansteuerbar ist.

Eine hierfür baulich vorteilhafte weitere Ausgestaltung ist dadurch erreicht, dass das Druckbegrenzungsventil über seinen beweglichen Teil mit einem elektrischen Schalter in Wirkverbindung steht, der mit einem von der Kraftstoff-Temperatur über einen Sensor gesteuerten weiteren Schalter elektrisch in Reihe angeordnet ist derart, dass mittels der Reihenschaltung die elektrische Heizeinrichtung des einen Kraftstofffilters bestromt ist.

Die vorbeschriebene erfindungsgemäße Ausgestaltung bietet den Vorteil, dass mit dem kombinierten Einsatz eines Druck- und eines Temperaturschalters zum Betrieb der Heizeinrichtung im Nebenstrom-Filter unter Zwischenschaltung einer Anzeigeeinrichtung eine Verschmutzung des Hauptstrom-Filters feststellbar ist, wenn trotz steigender Temperatur des Kraftstoffes eine hohe Druckdifferenz bestehen bleibt.

Eine zur Schonung des Bordnetzes verspätete Zuschaltung der Heizeinrichtung im Nebenstrom-Filter ist in weiterer Ausgestaltung der Erfindung dadurch erreicht, dass der andere Kraftstofffilter bzw. Hauptstrom-Filter einen Filtereinsatz umfasst mit einer ab der Unterschreitung des Kaltfilterungspunktes (CFPP) gegen Paraffin wirksamen katalytischen Beschichtung, die ein energieneutrales Durchschleusen von Paraffinflocken ermöglicht.

Das elektrische Bordnetz kann durch eine weitere erfindungsgemäße Ausgestaltung vorteilhaft dadurch geschont werden, dass die elektrische Intankpumpe mittels eines zwischen der Filteranordnung und der Pumpe der Einspritzanlage angeordneten Vorlaufdruckfühlers über die Motorsteuereinheit bedarfsgerecht drehzahlgeregelt ist. Mit dieser Maßnahme ist zum einen eine bedarfsgerechte Drehzahlregelung in vorteilhafter Weise erzielt. Zum anderen kann aber in der Motorsteuereinheit ein Programm abgelegt sein, das für tiefe Außentemperaturen bzw. Kraftstofftemperaturen eine vorbestimmt erhöhte Drehzahl der Intankpumpe zulässt, um beispielsweise im Kurzschluss umgewälzten Kraftstoff zusätzlich zu erwärmen.

Eine andere erfindungsgemäße Maßnahme zur bedarfsgerechten Energieaufnahme der Intankpumpe aus dem Bordnetz sieht vor, dass der Intankpumpe zur Mengenregelung ansaugseitig ein Druckbegrenzungsventil als aktive Drossel zugeordnet ist, das über eine Steuerleitung vom Kraftstoffdruck stromab der Filteranordnung gesteuert ist, wobei relativ hohe Kraftstoffdrücke stromab der Filteranordnung in Abstimmung mit einer Rückstellfeder des Druckbegrenzungsventils eine Reduzierung der Ansaugmenge der Intankpumpe bewirken, d. h. die Intankpumpe ist mengengeregelt.

Schließlich bietet die Erfindung in vorteilhafter Weise auch eine Rückkühlung des Kraftstoffes in baulich einfacher Weise dadurch, dass rückgeführter Kraftstoff temperaturabhängig gesteuert gegen eine Behälterwand des Kraftstoffbehälters gespritzt ist.

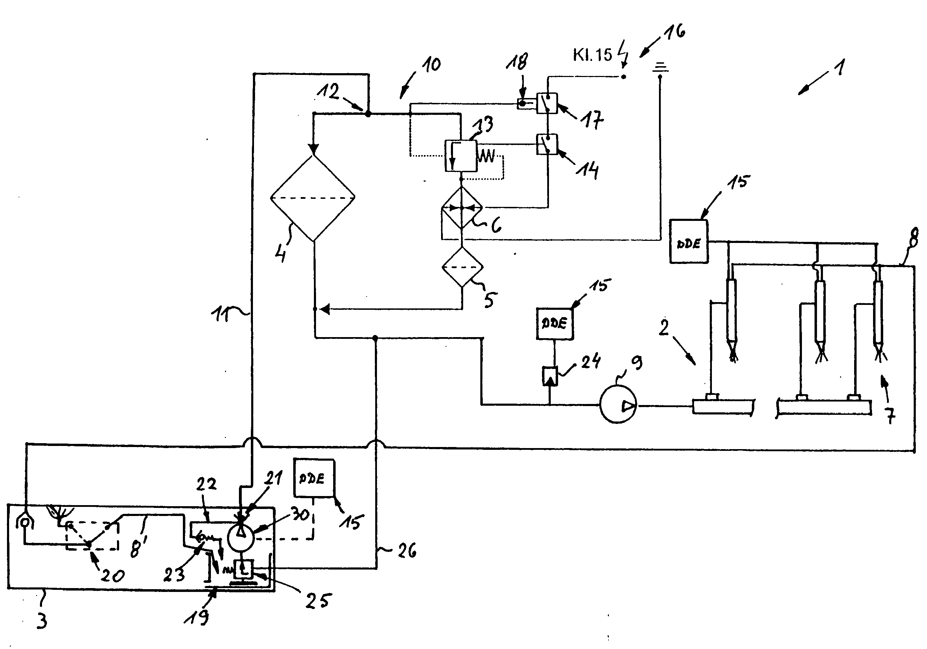

Die Erfindung ist anhand eines in der Zeichnung schematisch dargestellten Beispiels einer Kraftstoff-Förderanlage beschrieben.

Eine Kraftstoff-Förderanlage 1 für eine nicht näher dargestellte Diesel-Brennkraftmaschine 2 umfasst einen Kraftstoffbehälter 3, eine Kraftstoffpumpe 30, Kraftstofffilter 4 und 5 sowie eine Heizeinrichtung 6 für einen einer Einspritzanlage 7 der Brennkraftmaschine 2 zugeführten Kraftstoff, dessen Überschuss- und/oder Leckage-Menge über eine Rücklaufleitung 8 dem Kraftstoffbehälter 3 zugeführt ist.

Um in der Kraftstoff-Förderanlage 1 neben der Heizeinrichtung 6 zur Schonung des Bordnetzes eines Fahrzeuges auch sonstige, in der Förderanlage 1 anfallende Wärme zur Beeinflussung des Kraftstoffes auszunutzen, wird erfindungsgemäß vorgeschlagen, dass im Kraftstoffbehälter 3 eine steuer-/regelbare elektrische Intankpumpe 30 von relativ großer Förderleistung angeordnet ist, mittels der der Kraftstoff einer Pumpe 9 der Einspritzanlage 7 über eine Filteranordnung 10 zugeführt ist.

Diese Filteranordnung 10 umfasst erfindungsgemäß mit der Intankpumpe 30 über eine einzige Förderleitung 11 mittels eines Stromteilers 12 verbundene, parallel angeordnete Kraftstofffilter 4 und 5, von denen einer förderdruckabhängig gesteuert vom Kraftstoff durchströmt und zumindest mit einer druckabhängig gesteuerten Heizeinrichtung 6 ausgerüstet ist.

Ferner ist erfindungsgemäß in den Kraftstoffbehälter 3 über die Rücklaufleitung 8 rückgeführter Kraftstoff der Intankpumpe 30 ansaugseitig zugeführt.

In baulich vorteilhaft einfacher Ausführung ist der eine Kraftstofffilter 5 bzw. Nebenstrom-Filter 5 mittels eines stromab des Stromteilers 12 angeordneten Druckbegrenzungsventils 13 zu- und abschaltbar, wobei das Druckbegrenzungsventil 13 einen elektrischen Schalter 14 für die Heizeinrichtung 6 betätigt.

In Weiterbildung der Steuerung der Heizeinrichtung 6, die vorzugsweise im Nebenstrom-Kraftstofffilter 5 integriert ist, ist diese druck- und temperaturabhängig mittels Sensoren über eine Motorsteuereinheit 15 angesteuert. Eine andere Ansteuerung ist über mit der Klemme 15 eines Zündschlosses 16 in Reihe verbundene Schalter 14 und 17 erzielt. Beide vorgenannten Ansteuerungen können vorteilhafterweise kombiniert sein, wobei mit der Schalter-Ansteuerung bedarfsweise die Heizeinrichtung 6 eingeschaltet ist und deren Abschaltung über die Motorsteuereinheit 15 unter Einbeziehung weiterer relevanter Parameter unter der Prämisse der Schonung des Bordnetzes eines Fahrzeuges frühzeitig abgeschaltet ist. Weiter kann in der Motorsteuereinheit 15 die Ansteuerung einer Anzeigeeinrichtung angeordnet sein, die dann angesteuert ist, wenn bei einer oberhalb der Paraffinausscheidung liegenden Temperatur des Kraftstoffes weiterhin ein hoher Kraftstoffdruck durch die Filteranordnung 10 aufrechterhalten bleibt. Damit ist die Verschmutzung eines der Filter 4 und 5 der Filteranordnung 10 angezeigt.

Zur baulich vorteilhaften Ausgestaltung des Steuerkreises mit den Schaltern 14 und 17 steht das Druckbegrenzungsventil 13 über seinen beweglichen Teil mit dem elektrischen Schalter 14 in Wirkverbindung, der mit dem von der Kraftstoff-Temperatur über einen Sensor 18 gesteuerten Schalter 17 elektrisch in Reihe angeordnet ist derart, dass mittels der mit dem Zündschloss 16 verbundenen Reihenschaltung die elektrische Heizeinrichtung 6 bei Bedarf des Nebenstrom-Kraftstofffilters 5 bestromt ist. Mit dieser Anordnung ist die Filteranordnung 10 einerseits bedarfsgerecht eingeschaltet und über den temperaturgesteuerten Schalter 17 zur Schonung des Bordnetzes bedarfsgerecht abgeschaltet.

Weiter kann die Zuschaltung des Nebenstrom-Kraftstofffilters 5 mit der Heizeinrichtung 6 dadurch hinausgezögert werden, dass der andere Kraftstofffilter 4 bzw. Hauptstrom-Kraftstofffilter 4 einen Filtereinsatz umfasst, der mit einer katalytischen Beschichtung ausgerüstet ist, die es bei Unterschreitung des Kaltfilterungspunktes - CFPP - ermöglicht, Paraffinflocken im Kraftstoff energieneutral durchzuschleußen.

Um der Intankpumpe 30 insbesondere bei Kaltstart der Diesel-Brennkraftmaschine 2 ansaugseitig raschestmöglich temperierten Kraftstoff zur Verfügung zu stellen, steht die Intankpumpe 30 ansaugseitig mit einem im Kraftstoffbehälter 3 angeordneten Schwalltopf 19 in Verbindung, wobei in den Schwalltopf 19 rückgeführter Kraftstoff über eine Rücklaufleitung 8' eingebracht ist. Diese tankinnenseitig angeordnete Rücklaufleitung 8' kann beispielsweise über ein bimetallgesteuertes Ventil 20 geführt sein, das bei einer vorbestimmten Kraftstofftemperatur bewirkt, dass der relativ hoch temperierte rückfließende Kraftstoff zur Kühlung gegen eine Behälterwand des Kraftstoffbehälters 3 gespritzt ist.

Eine weitere erfindungsgemäße Maßnahme zur Steigerung der Temperatur des von der Intankpumpe 30 angesaugten Kraftstoffes sieht vor, dass von einer Förderleitung 11 zwischen der Intankpumpe 30 und einem Druckventil 21 eine Kurzschlussleitung 22 mit einem gesonderten Druckventil 23 abzweigt, wobei letzteres Druckventil 23 gegenüber dem Druckventil 21 in der Förderleitung 11 bei relativ hohem Druck früher öffnet. In Verbindung mit der erfindungsgemäß vorgesehenen steuer-/regelbaren elektrischen Intankpumpe 30 von relativ großer Förderleistung ergibt sich mit dem Umpumpen im Kurzschlusskreis eine zügige Erwärmung des Kraftstoffes.

Insbesondere für den vorbeschriebenen Betriebsfall der Intankpumpe 30, aber auch für den gesamten Förderbetrieb kann die Intankpumpe 30 mittels eines zwischen der Filteranordnung 10 und der Pumpe 9 der Einspritzanlage 7 angeordneten Vorlauf-Druckfühlers 24 über die Motorsteuereinheit 15 drehzahlgeregelt sein, wobei neben der Kraftstoffmengen-Anforderung für die Einspritzanlage 7 als Parameter zumindest die Kraftstoff-Temperatur als weiterer Parameter berücksichtigt ist.

Bei einer anderen Ausgestaltung zur Regelung der geförderten Kraftstoffmenge durch die Intankpumpe 30 ist dieser ansaugseitig ein Druckbegrenzungsventil 25 als aktive Drossel zugeordnet, wobei das Druckbegrenzungsventil 25 über eine Steuerleitung 26 vom Kraftstoffdruck stromab der Filteranordnung 10 gesteuert ist.

Beide vorbeschriebenen Arten der Mengenregelung können auch miteinander kombiniert sein, um eine temperaturabhängig reduzierte Belastung des Bordnetzes zu erzielen.

Weiter kann mit der druckabhängigen Ansteuerung der Heizeinrichtung 6 diese bei dadurch geringerer Nutzung höher bestromt werden.

## Patentansprüche

1. Kraftstoff-Förderanlage für eine Diesel-Brennkraftmaschine,
- umfassend einen Kraftstoffbehälter (3), eine Kraftstoffpumpe (30), zumindest einen Kraftstofffilter (4, 5) sowie eine Heizeinrichtung (6) für einen einer Einspritzanlage (7) der Brennkraftmaschine (2) zugeführten Kraftstoff, dessen
- Überschuss und/oder Leckage-Menge über eine Rücklaufleitung (8) dem Kraftstoffbehälter (3) zugeführt ist,
- wobei der Kraftstoff einer Pumpe (9) der Einspritzanlage (7) über eine Filteranordnung (10) zugeführt ist, die
- mit einer druckabhängig gesteuerten Heizeinrichtung (6) ausgerüstet ist und
- dass ferner in den Kraftstoffbehälter (3) über die Rücklaufleitung (8) rückgeführter Kraftstoff der Kraftstoffpumpe (30) ansaugseitig zugeführt ist,
**dadurch gekennzeichnet,**
- **dass** die Kraftstoffpumpe (30) in dem Kraftstoffbehälter (3) angeordnet ist und
- die Kraftstoffpumpe (30) elektrisch steuer- oder regelbar ist und
- **dass** die Filteranordnung (10) mit der Kraftstoffpumpe (30) über eine einzige Förderleitung (11) mittels eines Stromteilers (12) verbundene, parallel angeordnete Kraftstofffilter (4, 5) umfasst, von denen
- einer förderdruckabhängig gesteuert vom Kraftstoff durchströmt und mittels eines stromab des Stromteilers (12) angeordneten Druckbegrenzungsventils (13) zu- und abschaltbar ist, wobei
- das Druckbegrenzungsventil (13) ferner einen elektrischen Schalter (14) für die Heizeinrichtung (6) betätigt.

2. Kraftstoffanlage nach Anspruch 1, **dadurch gekennzeichnet,**
- **dass** die Heizeinrichtung (6) des einen Kraftstofffilters (5) druck- und temperaturabhängig mittels Sensoren (18) über eine Motorsteuereinheit (15) und/oder über mit einer Klemme (15) eines Zündschlosses (16) verbundene Schalter (14, 17) angesteuert ist.

3. Kraftstoffförderanlage nach den Ansprüchen 1 oder 2, **dadurch gekennzeichnet,**
- **dass** das Druckbegrenzungsventil (13) über seinen beweglichen Teil mit einem elektrischen Schalter (14) in Wirkverbindung steht, der
- mit einem von der Kraftstofftemperatur über einen Sensor (18) gesteuerten weiteren Schalter (17) elektrisch in Reihe angeordnet ist derart, dass
- mittels der Reihenschaltung die elektrische Heizeinrichtung (6) des einen Kraftstofffilters (5) bestrombar ist.

4. Kraftstoffförderanlage nach Anspruch 3, **dadurch gekennzeichnet,**
- **dass** der andere Kraftstofffilter (4) einen Filtereinsatz umfasst mit einer ab der Unterschreitung des Kaltfilterungspunktes (CFPP) gegen Paraffin wirksamen katalytischen Beschichtung.

5. Kraftstoffförderanlage nach einem der Ansprüche 1 bis 4, **dadurch gekennzeichnet,**
- **dass** die Kraftstoffpumpe (30) ansaugseitig mit einem im Kraftstoffbehälter (3) angeordneten Schwalltopf (19) in Verbindung steht, wobei
- in dem Schwalltopf (19) rückgeführter Kraftstoff durch eine Öffnung eingebracht ist, bis diese Öffnung temperaturabhängig geschlossen ist.

6. Kraftstoffförderanlage nach einem der Ansprüche 1 bis 5, **dadurch gekennzeichnet,**
**dass** die elektrische Kraftstoffpumpe (30) mittels eines zwischen der Filteranordnung (10) und der Pumpe (9) der Einspritzanlage (7) angeordneten Vorlauf-Druckfühlers (24) über die Motorsteuereinheit (15) drehzahlgeregelt ist.

7. Kraftstoffförderanlage nach einem der Ansprüche 1 bis 6, **dadurch gekennzeichnet,**
- **dass** der Kraftstoffpumpe (30) zur Mengenregelung ansaugseitig ein als aktive Drossel dienendes Druckbegrenzungsventil (25) zugeordnet ist, das
- über eine Steuerleitung (26) vom Kraftstoffdruck stromab der Filteranordnung (10) gesteuert ist.

8. Kraftstoffförderanlage nach einem der Ansprüche 1 bis 7, **dadurch gekennzeichnet,**
**dass** von einer Förderleitung (11) zwischen Kraftstoffpumpe (30) und einem Druckventil (21) eine Kurzschlussleitung (22) mit einem gesonderten Druckventil (23) abzweigt, wobei letzteres Druckventil (23) gegenüber dem Druckventil (21) in der Förderleitung (11) bei relativ hohem Druck früher öffnet.

## Claims

1. A fuel delivery installation for a diesel engine,
- comprising a fuel tank (3), a fuel pump (30), at least one fuel filter (4, 5) and a heater (6) for fuel supplied to an injection system (7) for the engine (2),
- excess and/or leaking fuel being supplied to the fuel tank (3) through a return line (8),
- wherein the fuel is supplied to the pump (9) of the injection system (7) via a filter arrangement (10) which
- is equipped with a pressure-controlled heater (6), and
- fuel recycled to the fuel tank (3) through the return line (8) is supplied to the suction side of the fuel pump (30),
**characterised in that**
- the fuel pump (30) is disposed in the fuel tank (3),
- the fuel pump (30) is electrically controllable in an open or closed loop and
- the filter arrangement (10) comprises parallel fuel filters (4, 5) connected to the fuel pump (30) by a single delivery line (11) via a flow divider (12),
- one filter being flowed through in controlled manner by fuel in dependence on the delivery pressure and being switchable on and off by a pressure-limiting valve (13) downstream of the flow divider (12), wherein
- the pressure-limiting valve (13) also actuates an electric switch (14) for the heater (6).

2. A fuel delivery installation according to claim 1, **characterised in that**
- the heater (6) for one fuel filter (5) is actuated in dependence on pressure and temperature by sensors (18) via an engine control unit (15) and/or via switches (14, 17) connected to a terminal (15) of an ignition lock (16).

3. A fuel delivery installation according to claim 1 or 2, **characterised in that**
- the movable part of the pressure limiting valve (13) is operatively connected to an electric switch (14) which
- is electrically connected in series to an additional switch (17) controlled by the fuel temperature via a sensor (18), such that
- the series circuit can energise the electric heater (6) of the one fuel filter (5).

4. A fuel delivery installation according to claim 3, **characterised in that**
- the other fuel filter (4) has a filter insert with a catalytic coating which is operative below the cold filtering point against paraffin (CFPP).

5. A fuel delivery installation according to any of claims 1 to 4, **characterised in that**
- on the suction side the fuel pump (30) is connected to a surge pot (19) disposed in the fuel tank (3), wherein
- fuel returned to the surge pot (19) is introduced through an opening until the opening is closed in dependence on temperature.

6. A fuel delivery installation according to any of claims 1 to 5, **characterised in that** the speed of the electric fuel pump (30) is controlled by the motor control unit (15) via a flow pressure sensor (24) disposed between the filter arrangement (10) and the pump (9) of the injection system (7).

7. A fuel delivery installation according to any of claims 1 to 6, **characterised in that**
- the flow rate of the fuel pump (30) is controlled by an active throttle in the form of an associated pressure-limiting valve (25) on the suction side,
- the valve being controlled via a control line (26) by the fuel pressure downstream of the filter arrangement (10).

8. A fuel delivery system according to any of claims 1 to 7, **characterised in that** a short-circuit line (22) with a separate pressure valve (23) branches off from a delivery line (11) between the fuel pump (30) and a pressure valve (21), wherein the pressure valve (23) opens before the pressure valve (21) in the delivery line (11) when the pressure is relatively high.

## Revendications

1. Dispositif d'alimentation en carburant pour moteur diesel,
- comprenant un réservoir de carburant (3), une pompe à carburant (30), au moins un filtre (4, 5) ainsi qu'une installation de chauffage (6) pour un carburant amené à un système d'injection (7) du moteur à combustion interne (2), dont
- l'excédent et/ou la quantité de fuite sont amenés au réservoir de carburant (3) par une conduite de retour (8),
- dans lequel le carburant est amené à une pompe (9) du système d'injection (7) par un dispositif de filtration (10), qui
- est équipé d'une installation de chauffage (6) commandée en fonction de la pression (6), et
- en outre, le carburant de la pompe à carburant (30) remis en circulation est amené du côté de l'admission dans le réservoir de carburant (3) par la conduite de retour (8),
**caractérisé en ce que**
- la pompe à carburant (30) est disposée dans le réservoir de carburant (3),
- la pompe à carburant (30) peut être commandée ou réglée électriquement, et
- le dispositif de filtration (10) comprend des filtres à carburant (4, 5) disposés parallèlement et reliés à la pompe à carburant (30) par une seule conduite de refoulement (11) au moyen d'un répartiteur de débit (12), dont
- l'un est traversé par le carburant commandé en fonction de la pression de refoulement et peut être connecté et déconnecté au moyen d'une soupape de limitation de pression (13) disposée en aval du répartiteur de débit (12),
- la soupape de limitation de pression (13) actionnant, en outre, un commutateur électrique (14) pour l'installation de chauffage (6).

2. Système d'alimentation en carburant selon la revendication 1,
**caractérisé en ce que**
l'installation de chauffage (6) d'un filtre à carburant (5) est commandé en fonction de la pression et de la température au moyen de capteurs (18) via une unité de commande de moteur (15) et/ou des commutateurs (14, 17) reliés à une borne (15) d'une serrure d'allumage (16).

3. Dispositif d'alimentation en carburant selon les revendications 1 ou 2,
**caractérisé en ce que**
- la soupape de limitation de pression (13) est en liaison active avec un commutateur électrique (14) par sa partie mobile, qui
- est disposé électriquement en série avec un autre commutateur (17) commandé par la température du carburant sur un capteur (18), de telle manière que
- l'installation de chauffage électrique (6) du filtre à carburant (5) est alimentée au moyen du montage en série.

4. Dispositif d'alimentation en carburant selon la revendication 3,
**caractérisé en ce que**
l'autre filtre à carburant (4) comprend une cartouche filtrante comportant un revêtement catalytique efficace contre la paraffine à partir du dépassement de la limite inférieure du point d'obstruction du filtre à froid (CFPP).

5. Dispositif d'alimentation en carburant selon l'une quelconque des revendications 1 à 4,
**caractérisé en ce que**
- la pompe à carburant (30) est en liaison du côté de l'admission avec un pot de turbulence (19) disposé dans le réservoir de carburant (3), dans lequel
- le carburant remis en circulation dans le pot de turbulence (19) est introduit par une ouverture, jusqu'à ce que cette ouverture soit fermée en fonction de la température.

6. Dispositif d'alimentation en carburant selon l'une quelconque des revendications 1 à 5,
**caractérisé en ce que**
la pompe à carburant électrique (30) est réglée en nombre de tours via l'unité de commande de moteur (15) au moyen d'un capteur de pression de refoulement (24) disposé entre le dispositif de filtration (10) et la pompe (9) du système d'injection (7).

7. Dispositif d'alimentation en carburant selon l'une quelconque des revendications 1 à 6,
**caractérisé en ce qu'**
- une soupape de limitation de pression (25) servant d'étranglement actif est associée à la pompe à carburant (30) pour régler le débit du côté de l'admission, et
- le dispositif de filtration (10) est commandé par la pression de carburant en aval par une conduite pilote (26).

8. Dispositif d'alimentation en carburant selon l'une quelconque des revendications 1 à 7,
**caractérisé en ce qu'**
une conduite de court-circuit (22) comportant une soupape de pression séparée (23) bifurque d'une conduite de refoulement (11) entre la pompe à carburant (30) et une soupape de pression (21), cette dernière soupape de pression (23) s'ouvrant plus tôt en cas de pression relativement élevée par rapport à la soupape de pression (21) dans la conduite de refoulement (11).
